# EUROPEAN PATENT APPLICATION

(11) **EP 4 560 794 A1**
(43) Date of publication of application: **28.05.2025**
(21) Application number: 24192709.4
(22) Date of filing: 02.08.2024
(51) Int. Cl.: H01M 50/103, H01M 50/474, H01M 50/477, H01M 10/04

(54) **SECONDARY BATTERY WITH RETAINERS**

(30) Priority: 23.11.2023 KR 20230164583
(71) Applicant: SAMSUNG SDI CO., LTD., Giheung-gu Yongin-si, Gyeonggi-do 17084 (KR)
(72) Inventor: BAE, Kwangsoo, 17084 Yongin-si (KR); YONG, Jun-Sun, 17084 Yongin-si (KR); LEE, Junhyung, 17084 Yongin-si (KR); CHOI, Seonung, 17084 Yongin-si (KR)
(74) Representative: Marks & Clerk LLP

(57) **Abstract**

A secondary battery includes a case having an opening formed at least at one end thereof; an electrode assembly accommodated in the case; a current collector electrically connected to the electrode assembly; a cap plate in the opening of the case; a retainer between the electrode assembly and the case; and a pressurizing member configured to apply pressure to the case from the retainer.

## Description

### BACKGROUND

### 1. Field

Aspects of some embodiments of the present disclosure relate to a secondary battery.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

In general, a secondary battery includes an electrode assembly composed of a positive electrode and a negative electrode, a case accommodating the electrode assembly, an electrode terminal connected to the electrode assembly, a vent for discharging gas generated inside the case, and the like. An insulator is interposed for electrical insulation between the case and the electrode assembly. This insulator is also referred to as a retainer.

Recently, prismatic batteries have become larger in size, as large cells, tall cells, and long cells, for example. In particular, with the expansion of large batteries (e.g. cells; as measured in terms of width, and length), ensuring mechanical rigidity is emerging as a new challenge. The large batteries have a structure that is vulnerable to stress concentrated on welded joints or shaking and vibration during logistics movement because the electrode assembly thereof with multiple large-area electrode plates stacked increases in weight significantly compared to existing batteries.

The above information disclosed in this Background section is for enhancement of understanding of the background of the present disclosure, and therefore, it may contain information that does not constitute related (or prior) art.

### SUMMARY

Aspects of some embodiments are directed to a secondary battery structured to ensure mechanical rigidity in a width direction of the battery and further in length and height directions of the battery by using retainers within the secondary battery.

According to some aspect of the present disclosure, there is provided a secondary battery including: a case having an opening formed at least at one end thereof; an electrode assembly accommodated in the case; a current collector electrically connected to the electrode assembly; a cap plate in the opening of the case; a retainer between the electrode assembly and the case; and a pressurizing member configured to apply pressure to the case from the retainer.

In some embodiments, the secondary battery further includes an insulator between the electrode assembly and the cap plate, wherein the retainer is at least one of a side retainer or a bottom retainer, the side retainer being between a side of the electrode assembly and an opposing surface of the case and connected to one of the cap plate and the insulator, and the bottom retainer being between a lower surface of the electrode assembly and an opposing surface of the case.

In some embodiments, the pressurizing member is located where the retainer is in contact with an inner corner of the case.

In some embodiments, the pressurizing member is at a position other than where the retainer is in contact with an inner corner of the case.

In some embodiments, the pressurizing member is an elastically movable body including: a fixed end fixedly coupled to the retainer; and a pressing end configured to press against the case by moving with respect to the fixed end.

In some embodiments, the case includes a lower projection protruding upward from an inner surface of the bottom thereof; and the retainer has a groove matched with the lower projection.

In some embodiments, the pressurizing member includes: a pressing part configured to press against the opposing surface of the case; and an elastic support configured to elastically support the pressing part to the retainer.

In some embodiments, the pressurizing member includes: a fixed part fixedly coupled to the retainer; and an elastically movable part configured to press against the case by elastically moving with respect to the fixed part.

In some embodiments, the pressurizing member is integrally formed with the retainer.

In some embodiments, the pressurizing member is separate from the retainer.

According to some aspect of the present disclosure, there is provided a retainer for a secondary battery including a case having an opening formed at least at one end thereof, an electrode assembly accommodated in the case, a current collector electrically connected to the electrode assembly, and a cap plate installed in the opening of the case, the retainer including: a pressurizing member between the electrode assembly and the case to apply pressure to the case.

In some embodiments, the secondary battery further includes an insulator located between the electrode assembly and the cap plate, and the retainer is at least one of a side retainer or a bottom retainer, the side retainer being between a side of the electrode assembly and an opposing surface of the case and connected to one of the cap plate and the insulator, and the bottom retainer being between a lower surface of the electrode assembly and an opposing surface of the case.

In some embodiments, the pressurizing member is an elastically movable body including: a fixed end fixedly coupled to the retainer; and a pressing end configured to press against the case by moving with respect to the fixed end.

In some embodiments, the pressurizing member is integrally formed with the retainer.

In some embodiments, the pressurizing member is separate from the retainer.

At least some of the above and the other features of the invention are set out in the claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to some embodiments of the present disclosure, by adding the pressurizing member to the side retainer and/or the bottom retainer from among the retainers of the secondary battery, the pressurizing member acts as a buffer in the space between the case and the electrode assembly therein, thereby ensuring mechanical rigidity in the horizontal direction (i.e. width direction) and/or vertical direction (i.e. height direction) of the battery. In particular, by ensuring mechanical rigidity in the width direction of the battery, it is possible to greatly complement vulnerabilities in the perpendicular or transverse direction of the bead formed during laser welding.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1A is a top perspective view of a prismatic secondary battery according to some embodiments of the present disclosure;
FIG. 1B is a cross-sectional view taken along the line I-I' of FIG. 1A, according to some embodiments of the present disclosure;
FIG. 1C is an exploded perspective view of the prismatic secondary battery, according to some embodiments of the present disclosure;
FIG. 2 is an exploded perspective view of a prismatic secondary battery according to some other embodiments of the present disclosure;
FIG. 3A is a view illustrating a configuration of a side retainer according to some embodiments of the present disclosure;
FIG. 3B is a view illustrating a configuration of a side retainer according to some other embodiments of the present disclosure;
FIG. 4 illustrates one of possible examples of a pressurizing member according to some embodiments of the present disclosure;
FIGS. 5A and 5B are views for explaining positions and actions of pressurizing members in the secondary battery illustrated in FIG. 2, according to some other embodiments of the present disclosure;
FIG. 6A is an enlarged view of the portion A of FIG. 5A, which illustrates an action of the pressurizing member located in the middle of the side retainer, according to some embodiments of the present disclosure;
FIG. 6B is an enlarged view of the portion B of FIG. 5A, which illustrates an action of the pressurizing member located at the bottom of the side retainer, according to some other embodiments of the present disclosure;
FIG. 7A illustrates a pressurizing member, according to some other embodiments of the present disclosure;
FIG. 7B illustrates another pressurizing member, according to some other embodiments of the present disclosure;
FIG. 8 illustrates a modified example of the pressurizing member in FIG. 4, according to some other embodiments of the present disclosure;
FIG. 9 illustrates an example of a combination of the pressurizing member in FIG. 4 and the pressurizing member in FIG. 8, according to some other embodiments of the present disclosure;
FIG. 10 illustrates still another pressurizing member, according to some other embodiments of the present disclosure;
FIG. 11A illustrates a further pressurizing member, according to some other embodiments of the present disclosure;
FIG. 11B illustrates a modified example of the pressurizing member in FIG. 11A, according to some other embodiments of the present disclosure;
FIG. 12 is a view of a secondary battery module in which secondary batteries are arranged according to some embodiments of the present disclosure;
FIG. 13 is a view of a secondary battery pack including the secondary battery module illustrated in FIG. 12, according to some other embodiments of the present disclosure; and
FIG. 14 is a conceptual view illustrating a vehicle equipped with the secondary battery pack illustrated in FIG. 13, according to some other embodiments of the present disclosure.

### DETAILED DESCRIPTIONS

Hereinafter, some of the present disclosure will be described with reference to the accompanying drawings. Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

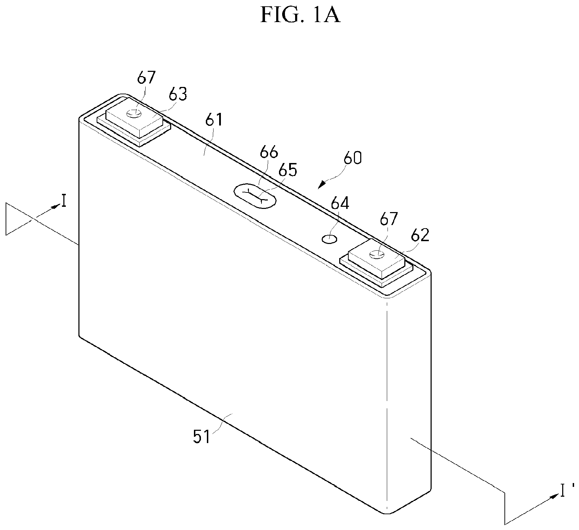

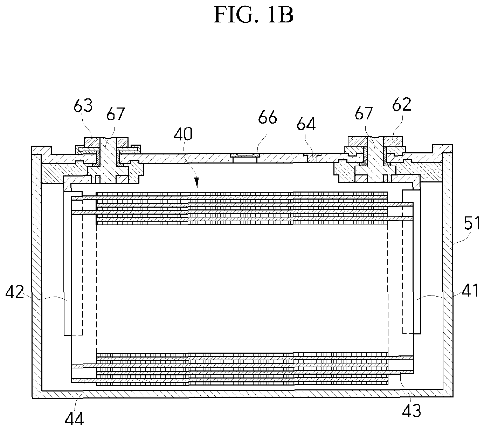

FIG. 1A is a top perspective view of a prismatic secondary battery, according to some embodiments of the present disclosure. FIG. 1B is a cross-sectional view taken along the line I-I' of FIG. 1A, according to some embodiments of the present disclosure.

First, the external appearance of the prismatic secondary battery illustrated in FIG. 1A will be described.

A case 51 defines an overall appearance of the prismatic secondary battery, and may be made of a conductive metal, such as aluminium, aluminium alloy, or nickel-plated steel. In addition, the case 51 may provide a space for accommodating an electrode assembly therein.

A cap assembly 60 may include a cap plate 61 that covers the opening of the case 51. In some examples, the case 51 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

With reference to FIG. 1B, the internal structure of the prismatic secondary battery and the coupling structure with the cap assembly 60 will be further described.

As shown in FIG. 1B, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the y direction) of the case 51. In some other embodiments, the electrode assembly 40 is a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminium or an aluminium alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

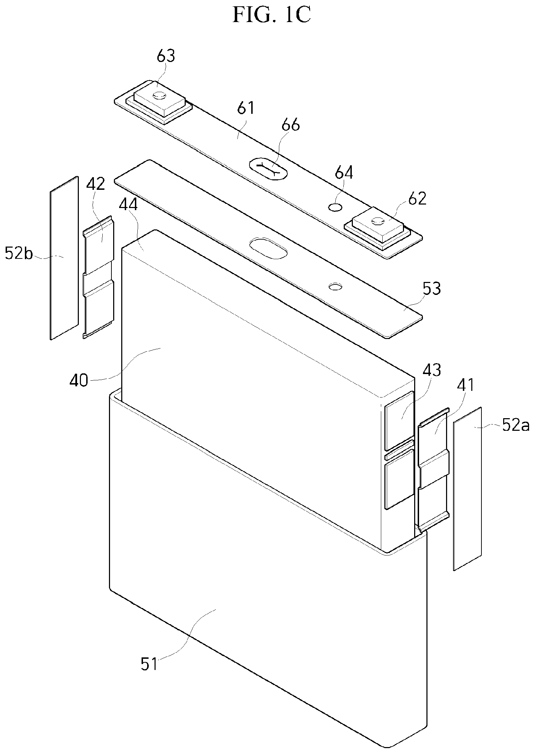

In some embodiments, the first electrode tab 43 is located on the right side of the electrode assembly 40, and the second electrode tab 44 may be located on the left side of the electrode assembly 40. In some other embodiments, the first electrode tab 43 and the second electrode tab 44 are located on one side of the electrode assembly 40 in the same direction. Here, for convenience of description, the left and right sides are defined according to the secondary battery as oriented in FIG. 1, and the positions thereof may change when the secondary battery is rotated left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate may be positioned at both ends (e.g., opposite ends) of the electrode assembly 40. In some embodiments, the electrode assembly 40 is accommodated in the case 51 along with an electrolyte. In addition, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively.

FIG. 1C is a schematic exploded perspective view of the prismatic secondary battery, according to some embodiments of the present disclosure.

The electrode assembly 40 that is inserted into the case 51 and the cap plate 61 that covers the top of the case 51 are illustrated in the cross-sectional view of FIG. 1B. FIG. 1C also illustrates the first current collector 41 and the second current collector 42, which are disassembled. As described above, the first current collector 41 and the second current collector 42 may electrically connect the first electrode tab 43 and the second electrode tab 44, which are exposed to both sides of the electrode assembly 40, to the first terminal 62 and the second terminal 63, respectively.

In the prismatic secondary battery, insulators may be arranged on the upper and lower surfaces and left and right sides of the electrode assembly 40 to electrically insulate the electrode assembly 40 from the cap plate 61 and the case 51.

For example, an upper insulator 53 may be interposed between the upper surface of the electrode assembly 40 and the cap plate 61, and a lower insulator may be interposed between the lower surface of the electrode assembly 40 and the inner underside of the case 51. The upper insulator 53 is responsible for insulation between the electrode assembly 40 and the cap plate 61. The lower insulator may be manufactured in the form of a plate or a sheet and may be interposed between the lower surface of the electrode assembly 40 and the inner underside of the case 51 facing the same.

In addition, side insulators (i.e., right side insulator 52a and left side insulator 52b) may be interposed between the left and right sides of the electrode assembly 40 and the inner opposing surfaces of the case 51, respectively.

Because the side and lower insulators also serve as supports between the case 51 and the electrode assembly 40, they are also referred to as retainers. Hereinafter, the side insulators 52a and 52b will be referred to as side retainers, and the lower insulator will be referred to as a bottom retainer.

The side retainers 52a and 52b may be attached to cover the first and second current collectors 41 and 42 bonded to both sides of the electrode assembly 40. The shape and attachment method of the side retainers 52a and 52b may be implemented in various suitable ways depending on the shape and configuration of the secondary battery. For example, the side retainers 52a and 52b may have upper ends attached to both ends of the upper insulator 53 by hooking or projection insertion. As another example, the side retainers 52a and 52b may have upper ends attached to both ends of the cap plate 61 by hooking or projection insertion.

According to an example of the conventional secondary battery, the side retainers 52a and 52b may each have a thickness of about 0.2 mm.

FIG. 1C illustrates the prismatic secondary battery with a height of about 100 mm, a width of about 200 mm, and a depth of about 30 mm. Recently, prismatic batteries have become larger in size, exhibiting large cells, tall cells, and long cells. In particular, with the expansion of large prismatic batteries (cells) over all in height, width, and length (for example, 245×250×63 mm), ensuring mechanical rigidity is emerging as a new challenge.

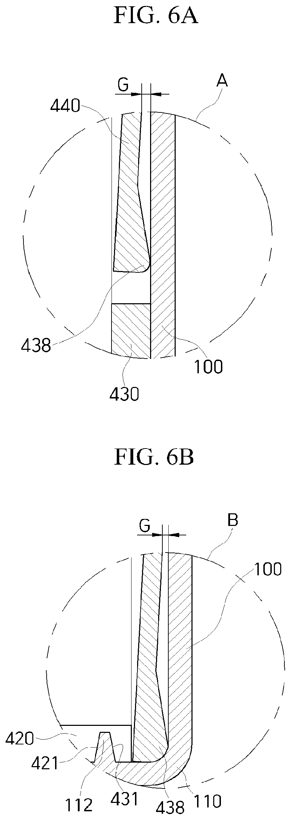

An insert gap may be set between each side retainer 52a or 52b and an opposing surface inside the case 51 to facilitate the insertion of the electrode assembly 40 into the case 51 when manufacturing the secondary battery (see, e.g., FIGS. 6A and 6B). The insert gap may be set to about 0.6 mm, for example.

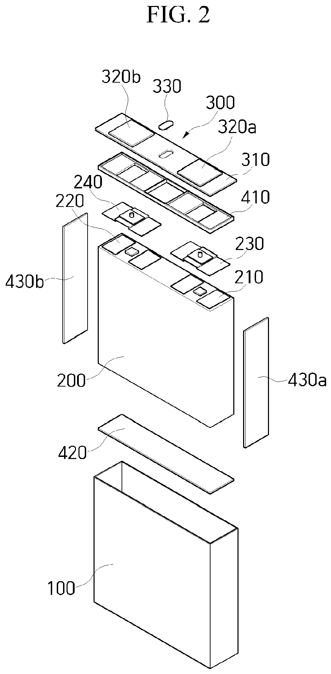

FIG. 2 illustrates a prismatic secondary battery with another structure to which the present disclosure is applicable, which is an example of the above-mentioned large prismatic battery. Unlike FIGS. 1B and 1C, FIG. 2 illustrates a structure (so-called top-tab structure) in which first and second electrode tabs 210 and 220 are located at the top of an electrode assembly 200. First and second current collectors 230 and 240 may be bonded to the first and second electrode tabs 210 and 220 by laser plate welding (LPW), or any other suitable method. For reference, FIGS. 1B and 1C above illustrate a so-called side-tab structure in which the first and second electrode tabs 43 and 44 are located on both sides of the electrode assembly 40.

The large prismatic secondary battery illustrated in FIG. 2 may include an electrode assembly 200 inserted into a case 100, a cap assembly 300 that includes a cap plate 310 located at the top of the electrode assembly 200 and bonded to the case 100, an upper insulator 410 for insulation between the top of the electrode assembly 200 and the cap plate 310, a lower insulator or bottom retainer 420 for insulation between the bottom of the electrode assembly 200 and the case 100, and side insulators or side retainers 430a and 430b for insulation between both sides of the electrode assembly 200 and the case 100. The cap assembly 300 may include a first terminal 320a and a second terminal 320b that are assembled to the cap plate 310, a vent 330, other electrolyte injection ports, and/or the like.

Here, the electrode assembly 200 may be in the form of a jelly roll, but is not limited thereto, and may also be in the form of a stack, for example. The upper insulator 410, the bottom retainer 420, and the side retainers 430a and 430b are also referred to as an insulator box in the sense that the electrode assembly 200 is placed in the space defined by them. (Hereinafter, reference numerals 430a and 430b of the right and left side retainers will be collectively indicated by 430.)

Even in the case of the secondary battery illustrated in FIG. 2, the side retainers 430a and 430b may have upper ends attached to both ends of the upper insulator 410 or the cap plate 310 by hooking or projection insertion. The side retainers 430a and 430b may have lower ends attached to both ends of the lower insulator 420 by hooking or projection insertion.

In the structure of this large battery, the electrode assembly 200 with multiple large-area electrode plates stacked increases in weight significantly (e.g., 6 times) compared to the existing battery. Hence, when the current collectors are bonded to each other by the existing bonding method, LPW, stress is concentrated on the weld bead of the LPW (for example, stress is concentrated in a direction perpendicular to the direction of bead formation), which may deteriorate the strength of the welded joint. Moreover, the electrode assembly 200 may be out of position or tilted within the case 100 due to battery shaking or falling during logistics movement.

To solve this issue, there are provided a retainer structure and a secondary battery including the same for ensuring mechanical rigidity in a width direction of the battery and further in length and height directions of the battery.

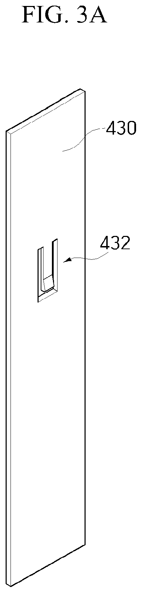

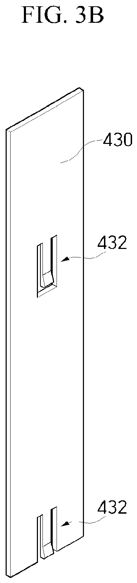

FIGS. 3A and 3B are views illustrating configurations of side retainers according to some embodiments of the present disclosure.

To each side retainer 430, a pressurizing member 432 is added that is structured to apply pressure to the inner surface of the case 100 (see, e.g., FIG. 1C) to provide a buffering action in the space between the side retainer 430 and the inner opposing surface of the case.

FIG. 3A illustrates an example in which one pressurizing member 432 is located at approximately the middle point of the side retainer 430. FIG. 3B illustrates an example in which one pressurizing member 432 is located at the middle point of the side retainer 430 and another pressurizing member 432 is located at the bottom thereof.

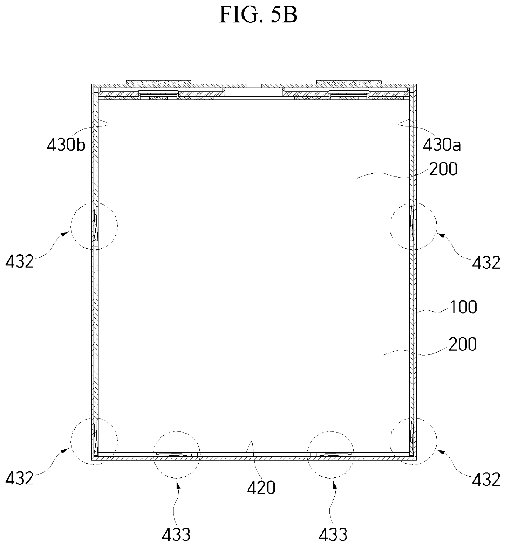

Although FIGS. 3A and 3B illustrate that the pressurizing member(s) 432 is (are) added to the side retainer 430 from among the retainers, the present disclosure is not limited thereto. For example, pressurizing members 433 (see, e.g., FIG. 5B) may also be added to the bottom retainer 420 (see, e.g., FIG. 2). The pressurizing members 433 added to the bottom retainer 420 may act as buffers between the bottom of the electrode assembly 200 and the underside of the case 100 facing the same, thereby ensuring the vertical rigidity of the battery.

In this way, by adding the pressurizing members 432 and/or 433 to the side retainer 430 and/or the bottom retainer 420, the pressurizing members 432 and/or 433 may act as buffers in the space between the case 100 and the electrode assembly 200, thereby ensuring mechanical rigidity in the horizontal direction (i.e., the width direction) and/or vertical direction (i.e., the height direction) of the battery.

In order to add the pressurizing members 432 or 433 and to ensure the buffering action of the pressurizing members 432 or 433, it may be preferable that the side retainer 430 or the bottom retainer 420 be further increased in thickness and/or width from the conventional thickness level of about 0.2 mm.

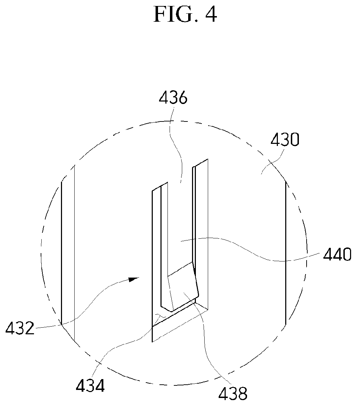

FIG. 4 illustrates one of possible examples of the pressurizing member(s) 432 according to some embodiments of the present disclosure. The pressurizing member 432 illustrated in the example of FIG. 4 is approximately in the form of a hook and is configured to move elastically.

For example, the pressurizing member 432 (or 433) may include a cutout part 434 formed by cutting a portion of the side retainer 430 (or bottom retainer 420) to form an empty space, and an elastically movable body 440 having one end as a fixed end 436 fixedly coupled to (e.g., fixed/attached to) the cutout part 434 and the other end as a pressing end 438 moving in a direction perpendicular to the surface of the side retainer 430 (or bottom retainer 420) in the cutout part 434. The pressurizing member 432 as illustrated in FIG. 4 may be defined as an upper fixed/lower movable type.

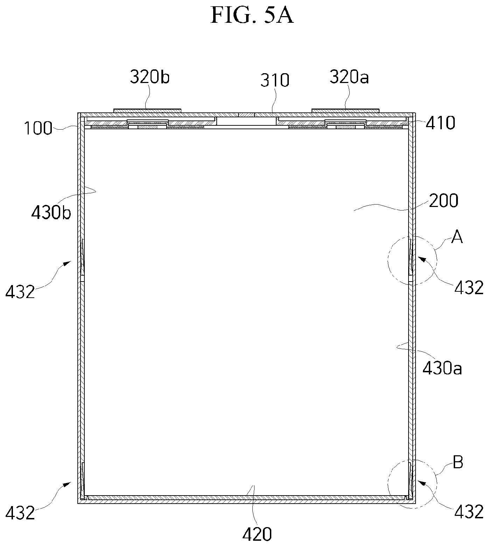

FIG. 5A is a view for explaining positions and actions of pressurizing members 432 in the secondary battery illustrated in FIG. 2, according to some embodiments of the present disclosure.

The pressurizing members 432 may be selectively installed at various suitable positions. In the embodiment of FIG. 5A, the pressurizing members 432 are illustrated as being installed in the middle and lower corner of each side retainer 430. However, in some other embodiments, the pressurizing members 432 is installed in the top, middle, and lower corners of each side retainer 430.

In some other embodiments, the pressurizing members 433 is added to the bottom retainer 420 together with or independently from the side retainer 430, as illustrated in FIG. 5B. This may provide a buffering effect against the vertical (i.e., height) movement of the electrode assembly 200 within the case 100.

FIG. 6A is an enlarged view of the portion A of FIG. 5A, which illustrates an action of the pressurizing member 432 located in the middle of the side retainer 430, according to some embodiments of the present disclosure. It is shown that the elastic repulsive force generated by inserting the side retainer 430 into the case 100 and pressing the apex of the pressing end 438 against the inner surface of the case 100 applies pressure to the inner surface of the case 100. As a result, the insert gap G set between the side retainer and the opposing surface of the case as mentioned above is offset by the pressing end 438, thereby making it possible or very difficult to ensure mechanical rigidity in the width direction of the battery and obtain a buffering effect.

FIG. 6B is an enlarged view of the portion B of FIG. 5A, which illustrates an action of the pressurizing member 432 located at the bottom of the side retainer 430, according to some embodiments of the present disclosure. In FIG. 6B, it is shown that the elastic repulsive force generated by pressing the apex of the pressing end 438 against the inner angle of the corner 110 where the side and bottom of the case 100 meet applies pressure to the inner surface of the corner 110 of the case 100. As a result, the insert gap G is offset by the pressing end 438, thereby making it possible to ensure mechanical rigidity in the vertical direction in addition to the width direction of the battery and obtain a buffering effect.

In FIG. 6B, reference numeral 112 indicates a projection created at the bottom of the case 100 during manufacturing thereof to protrude upward from the inner surface of the bottom thereof. In some embodiments, the bottom retainer 420 has a groove 421 formed on the bottom thereof to match the above lower projection 112. By coupling the lower projection 112 to the groove 421, the bottom retainer 420 may be firmly seated on the underside of the case 100. In some other embodiments, the side retainer 430 has a groove 431 formed on the bottom thereof to match the above lower projection 112. By coupling the lower projection 112 to the groove 431, the side retainer 430 may be firmly seated on the lower corner 110 of the case 100.

Various pressurizing members will now be described.

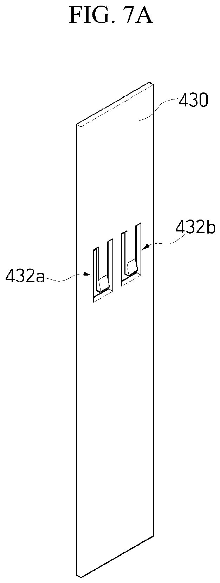

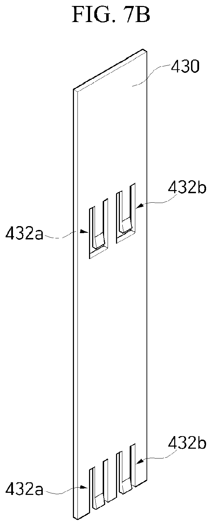

According to the examples illustrated in FIGS. 7A and 7B, a first pressurizing member 432a and a second pressurizing member 432b may be arranged transversely on one side retainer 430 (and/or bottom retainer 420) to increase a pressurizing force. Although FIG. 7A illustrates two pressurizing members arranged, embodiments of the present invention are not limited thereto, and more than two pressurizing members may be transversely arranged.

FIG. 7A is a view corresponding to the embodiments of FIG. 3A and illustrates that a pair of first and second pressurizing members 432a and 432b is located at approximately the middle point of the side retainer 430. FIG. 7B is a view corresponding to the embodiments of FIG. 3B and illustrates that a pair of first and second pressurizing members 432a and 432b is located at each of the middle point and bottom of the side retainer 430.

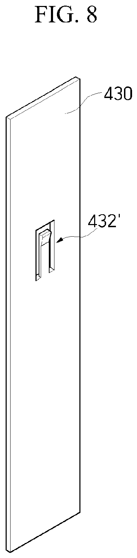

FIG. 8 illustrates a modified example of the upper fixed/bottom movable pressurizing member 432 in FIG. 4, according to some embodiments of the present disclosure. Contrary to the shape illustrated in FIG. 4, in FIG. 8 it is shown that a lower fixed/upper movable pressurizing member 432' is installed on the retainer 430.

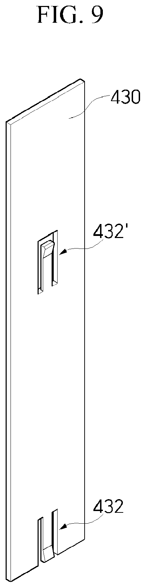

According to another example, two pressurizing members 432 and 432', which are a combination of the types in FIGS. 4 and 8 may be used. For example, as illustrated in FIG. 9, the lower fixed/upper movable pressurizing member 432' as illustrated in FIG. 8 may be applied to the middle point of the side retainer 430, and the upper fixed/lower movable pressurizing member 432 as illustrated in FIG. 4 may be applied to the bottom of the side retainer 430.

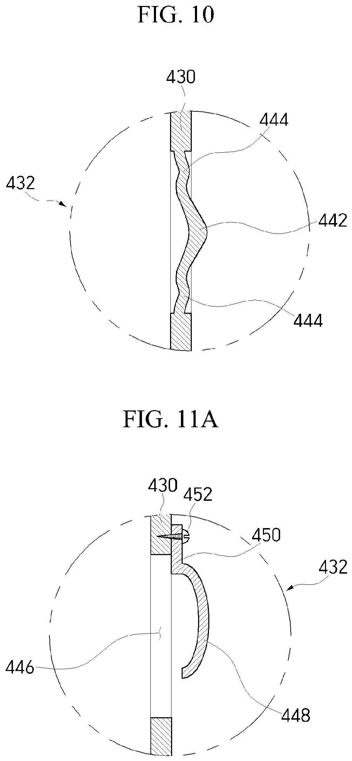

FIG. 10 illustrates still another pressurizing member 432, according to some embodiments of the present disclosure. FIG. 10 is a cross-sectional view of the pressurizing member 432 formed on the side retainer 430 (and/or bottom retainer 420). The pressurizing member 432 according to this example has a structure in which an approximately hemispherical pressing part 442 may be supported on both sides thereof by elastic supports 444 to elastically move approximately perpendicularly or transversely to the surface of the retainer 430.

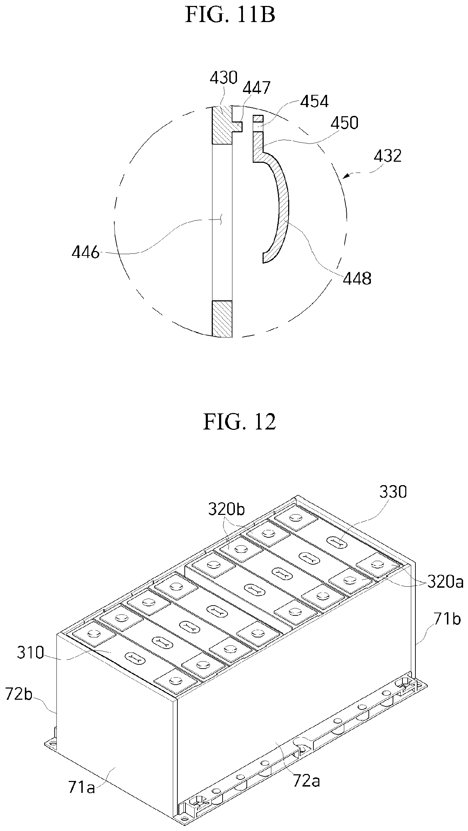

FIG. 11A illustrates a further pressurizing member 432, according to some embodiments of the present disclosure. In this example, the pressurizing member 432 is in the form of a leaf spring. In the previous examples, the pressurizing member 432 has been described as being integrated with the retainers 430 and 420. However, in the example of FIG. 11A (and, e.g., FIG. 11B), the pressurizing member 432 will be described as being separate from the retainers 430 and 420.

A cutout part 446 may be formed in the side retainer 430 (and/or bottom retainer 420), and an elastically movable body in the form of a leaf spring may be movably installed approximately perpendicularly or transversely to the surface of the retainer in the cutout part 446. The pressurizing member 432 in the form of a leaf spring may include a fixed part 450 fixedly coupled to (e.g., fixed/attached to) the retainer 430, a fastener 452 for fixedly coupling (e.g., fixing/attaching) the fixed part 450 to the retainer 430, and an elastically movable part 448 that moves freely by elasticity within the cutout part 446 with respect to the fixed part 450 to press against the inner surface of the case 100.

FIG. 11B illustrates a modified example of the pressurizing member 432 in the form of a leaf spring, according to some embodiments of the present disclosure. The pressurizing member 432 according to this example may include a fixed part 450 fixedly coupled (e.g., fixed/attached) to the retainer 430, a through-hole 454 formed in the fixed part 450, and an elastically movable part 448 that moves freely by elasticity within the cutout part 446 with respect to the fixed part 450 to press against the inner surface of the case 100. The through-hole 454 is coupled to a boss 447 formed in the retainer 430 to secure the fixed part 450 by heat fusion, ultrasonic fusion, or any other suitable method.

In the examples of FIGS. 11A and 11B, the elastically movable part 448 may be made of at least a non-conductive material. However, depending on the design of the retainer, the elastically movable part 448 may also be made of a conductive material.

A method of manufacturing the secondary battery having the above-mentioned structure will be described.

The method of manufacturing the secondary battery according to some embodiments of the present disclosure includes: manufacturing an electrode assembly 200; manufacturing a case 100 embedded with the electrode assembly 200; manufacturing retainers, namely the above-mentioned side retainers 430 and bottom retainer 420, located between the electrode assembly 200 and the case 100 when the electrode assembly 200 is embedded in the case 100; and manufacturing a pressurizing member 432 for applying pressure to the case 100 from the side retainers 430 and/or the bottom retainer 420 when the electrode assembly 200 is embedded in the case 100.

Here, in manufacturing retainers, the retainers may be side retainers 430 located between the sides of the electrode assembly 200 and the case 100, as mentioned above. Additionally or alternatively, the retainer may be a bottom retainer 420 located between the lower surface of the electrode assembly 200 and the case 100.

In describing the manufacturing of the pressurizing member, a detailed description of the pressurizing member may not be repeated because the pressurizing member 432 may be the same or substantially the same as the pressurizing member described above.

In some embodiments, the pressurizing member 432 is manufactured integrally with the retainers 430(see, e.g., FIGS. 3A, 3B, 4, 7A, 7B, 8, and 10). Examples of the integral manufacturing method may include concurrent (e.g., simultaneous) injection or insert injection using a single mold or multiple molds, or concurrent (e.g., simultaneous) molding using a 3D printer.

In some other embodiments, the pressurizing member 432 is manufactured separately from the retainers 430 (see, e.g., FIGS. 11A and 11B). Examples of the separate manufacturing method may include manufacturing a retainer body (by, e.g., injection molding, 3D printing, or the like), manufacturing a separate pressurizing member (by, e.g., injection molding, 3D printing, pressing, or the like), and then fastening or bonding them for assembly.

Hereinafter, any material that is usable for the secondary battery according to some embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used as the composite oxide: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8), and/or the like.

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

In some examples, the content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The current collector may be aluminium (Al) but is not limited thereto.

The negative electrode active material may include a material capable of reversibly intercalating/deintercalating lithium ions, lithium metal, an alloy of lithium metal, a material capable of being doped and undoped with lithium, a transition metal oxide, and/or the like.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to some embodiments, the silicon-carbon composite is in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt% to about 99 wt% of a negative electrode active material, about 0.5 wt% to about 5 wt% of a binder, and about 0 wt% to about 5 wt% of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, or combinations thereof may be used.

An electrolyte for a lithium secondary battery may include a non-aqueous organic solvent, a lithium salt, and/or the like.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film of two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof, but is not limited thereto.

The organic material and the inorganic material may be mixed in one coating layer or may be in the form of a coating layer containing an organic material and a coating layer containing an inorganic material that are laminated on each other.

FIG. 12 is a view of a secondary battery module in which prismatic secondary batteries are arranged according to some embodiments of the present disclosure. With the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing end plates 71a and 71b and a pair of facing side plates 72a and 72b. The secondary batteries may be designed appropriately in a suitable arrangement (e.g., direction) and number to obtain desired voltage and current capabilities.

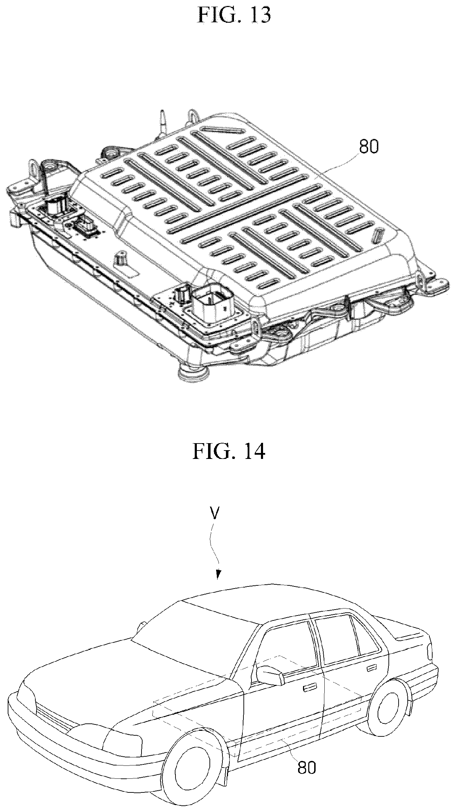

FIG. 13 is a view schematically showing the configuration of a battery pack 80 according to some embodiments of the present disclosure. Referring to FIG. 13, a battery pack 80 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 80 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but is not limited thereto. FIG. 14 shows a vehicle V which includes the battery pack 80 shown in FIG. 13 on the lower body thereof. The vehicle V may operate by (e.g., may be powered by) receiving power from the battery pack 80.

Although the present disclosure has been described above with respect to some embodiments thereof, the present disclosure is not limited thereto. Various suitable modifications and variations can be made thereto by those skilled in the art within the equivalent scope of which is defined by the following claims and the equivalents thereof.

## Claims

1. A secondary battery comprising:
a case having an opening formed at least at one end thereof;
an electrode assembly accommodated in the case;
a current collector electrically connected to the electrode assembly;
a cap plate in the opening of the case;
a retainer between the electrode assembly and the case; and
a pressurizing member configured to apply pressure to the case from the retainer.

2. The secondary battery according to claim 1, further comprising an insulator between the electrode assembly and the cap plate,
wherein the retainer is at least one of a side retainer or a bottom retainer, the side retainer between a side of the electrode assembly and an opposing surface of the case and connected to one of the cap plate and the insulator, and the bottom retainer being between a lower surface of the electrode assembly and the opposing surface of the case.

3. The secondary battery according to claim 1 or claim 2, wherein the pressurizing member is located where the retainer is in contact with an inner corner of the case.

4. The secondary battery according to claim 1 or claim 2, wherein the pressurizing member is at a position other than where the retainer is in contact with an inner corner of the case.

5. The secondary battery according to any one of claims 1 to 4, wherein the pressurizing member is an elastically movable body comprising:
a fixed end fixedly coupled to the retainer; and
a pressing end configured to press against the case by moving with respect to the fixed end.

6. The secondary battery according to any one of claims 1 to 5, wherein:
the case comprises a lower projection protruding upward from an inner surface of a bottom or the case; and
the retainer has a groove matched with the lower projection.

7. The secondary battery according to any one of claims 1 to 4, wherein the pressurizing member comprises:
a pressing part configured to press against an opposing surface of the case; and
an elastic support configured to elastically support the pressing part to the retainer.

8. The secondary battery according to any one of claims 1 to 4, wherein the pressurizing member comprises:
a fixed part fixedly coupled to the retainer; and
an elastically movable part configured to press against the case by elastically moving with respect to the fixed part.

9. The secondary battery according to any one of claims 1 to 7, wherein the pressurizing member is integrally formed with the retainer.

10. The secondary battery according to claim 1 or claim 8, wherein the pressurizing member is separate from the retainer.

11. A retainer for a secondary battery comprising a case having an opening formed at least at one end thereof, an electrode assembly accommodated in the case, a current collector electrically connected to the electrode assembly, and a cap plate installed in the opening of the case, the retainer comprising:
a pressurizing member between the electrode assembly and the case to apply pressure to the case.

12. The retainer according to claim 11, wherein the secondary battery further comprises an insulator located between the electrode assembly and the cap plate, and
wherein the retainer is at least one of a side retainer or a bottom retainer, the side retainer being between a side of the electrode assembly and an opposing surface of the case and connected to one of the cap plate and the insulator, and the bottom retainer between a lower surface of the electrode assembly and the opposing surface of the case.

13. The retainer according to claim 11 or claim 12, wherein the pressurizing member is an elastically movable body comprising:
a fixed end fixedly coupled to the retainer; and
a pressing end configured to press against the case by moving with respect to the fixed end.

14. The retainer according to any one of claims 11 to 13, wherein the pressurizing member is integrally formed with the retainer.

15. The retainer according to any one of claims 11 to 13, wherein the pressurizing member is separate from the retainer.
